# EUROPEAN PATENT APPLICATION

(11) **EP 4 653 581 A1**
(43) Date of publication of application: **26.11.2025**
(21) Application number: 24744596.8
(22) Date of filing: 12.01.2024
(51) Int. Cl.: C25B 9/00, C25B 1/04, C25B 1/50, C25B 9/65, C25B 15/02

(54) **WATER ELECTROLYSIS SYSTEM AND METHOD FOR CONTROLLING SAME**

(30) Priority: 20.01.2023 JP 2023007615
(71) Applicant: Hitachi, Ltd., Tokyo 100-8280 (JP)
(72) Inventor: KAKUYA, Hiromu, Tokyo 100-8280 (JP)
(74) Representative: MERH-IP Matias Erny Reichl Hoffmann Patentanwälte PartG mbB
(86) International application number: PCT/JP2024/000669
(87) International publication number: WO 2024/154673

(57) **Abstract**

In a water electrolysis system, an AC-side connection end of a power converter is connected to an AC power grid, a series circuit constituted by at least one electrolysis stack and a circuit breaker connected to the at least one electrolysis stack is connected to a DC-side connection end of the power converter, a controller reduces the power flowing to the DC-side connection end before the electrolysis stack is isolated from the series circuit, while maintaining a speed at which the power converter reduces the power flowing to the DC-side connection end below a speed that allows a difference of an amplitude of a voltage of the AC power grid from a reference value to be less than a predetermined value, and when reaching a power level enabling disconnection of an internal DC circuit by the circuit breaker, disconnects the circuit breaker connected to the DC circuit and isolates the electrolysis stack from the series circuit.

## Description

### Technical Field

The present invention relates to a water electrolysis system and a method for controlling the same.

### Background Art

Compared to fossil fuels, hydrogen is clean energy that does not discharge carbon dioxide during combustion. Therefore, it has attracted attention as one of clean energy for realizing carbon neutral, and technological development related to production, transportation, and utilization of hydrogen has been advanced. In particular, with regard to hydrogen production, hydrogen can be produced at any place by electrolyzing water, and thus a water electrolysis system capable of producing hydrogen by water electrolysis has attracted attention as a means for reducing the amount of energy imported and improving the self-sufficiency of energy, and a large amount of hydrogen is planned to be introduced mainly in Europe.

A water electrolysis system has been introduced in a large amount and has been increased in capacity. A basic configuration of the water electrolysis system includes an electrolysis tank (electrolysis stack) responsible for water electrolysis, a power supply (rectifier) for supplying DC power to the electrolysis stack is connected, and the power supply is connected to a power grid via a transformer. The increase in capacity can be realized by parallelizing the basic configuration, but a large number of power supplies and transformers are required, and an increase in cost and an increase in occupied area become problems. In order to solve this problem, there is a means for connecting an electrolysis stack group, in which a plurality of electrolysis stacks is connected, to a large-capacity power supply to reduce the number of power supplies and transformers. In particular, PTL 1 discloses a configuration in which electrolysis stacks on a DC power side of a power supply are connected in series.

PTL 1 discloses that a configuration in which two electrolysis stacks are connected in series, with one circuit breaker provided before and one after the series connection, a circuit that bypasses the two circuit breakers is provided, and one circuit breaker is provided in the bypass is set as a minimum unit, and the minimum units are connected in series. In addition, a procedure is disclosed in which, when the electrolysis stacks constituting the minimum unit are isolated from the series connection, the circuit breaker of the bypass is connected such that a current flows through the bypass after a supply amount of DC power supplied to the minimum unit is set to 0, and the circuit breakers connected before and after the electrolysis stacks are isolated.

### Citation List

### Patent Literature

PTL 1: US 2022/0220620 A

### Summary of Invention

### Technical Problem

PTL 1 is an effective technique in a case where, when a part of the electrolysis stack group constituting a water electrolysis device becomes abnormal, the electrolysis stack is isolated and replaced. However, there are the following problems. A large-scale water electrolysis system is connected to a power grid since the water electrolysis system utilizes electric power and electrolyzes water. By connecting a large amount of the water electrolysis system to the power grid, an operation state of the water electrolysis system may affect the power grid.

As disclosed in PTL 1, when the DC power is set to 0 when the electrolysis stack is isolated, if an operation of the power supply connected to the electrolysis stack is executed abruptly, the voltage (grid voltage) of the power grid may fluctuate greatly, and the operation of other equipment connected to the power grid may be hindered.

The present invention has been made to solve the above-described problems, and an object of the present invention is to provide a water electrolysis system capable of suppressing an influence on a grid voltage of a power grid when an electrolysis stack is isolated, and a method for controlling the water electrolysis system.

### Solution to Problem

In order to achieve the above object, a water electrolysis system of the present invention is a water electrolysis system including: a power converter capable of converting AC and DC to transmit and receive power between an AC-side connection end and a DC-side connection end; an electrolysis stack which electrolyzes water to generate hydrogen and oxygen; a circuit breaker which is connected to a DC circuit on a DC-side connection end side and enables connection and disconnection of the DC circuit by an external signal or an external operation; and a control device which controls the power converter and the circuit breaker. The AC-side connection end of the power converter is connected to an AC power grid, a series circuit constituted by at least one electrolysis stack and the circuit breaker connected to the at least one electrolysis stack is connected to the DC-side connection end of the power converter, and the control device reduces the power flowing to the DC-side connection end before isolation of the electrolysis stack from the series circuit, while maintaining a speed at which the power converter reduces the power flowing to the DC-side connection end below a speed that allows a difference of an amplitude of a voltage of the AC power grid from a reference value to be less than a predetermined value, and, when reaching a power level enabling disconnection of an internal DC circuit by the circuit breaker, disconnects the circuit breaker connected to the DC circuit and isolates the electrolysis stack from the series circuit. Other aspects of the present invention will be described in the following embodiment.

### Advantageous Effects of Invention

According to the present invention, it is possible to suppress the influence on the grid voltage of the power grid when the electrolysis stack is isolated.

### Brief Description of Drawings

[FIG. 1] FIG. 1 is a diagram illustrating a device configuration of a water electrolysis system according to a first embodiment.
[FIG. 2] FIG. 2 is a diagram illustrating a device configuration of an electrolysis stack group according to the first embodiment.
[FIG. 3] FIG. 3 is a time chart illustrating a system operation and a grid voltage at the time of isolation in a comparative example.
[FIG. 4] FIG. 4 is a time chart illustrating a system operation and a grid voltage at the time of isolation according to the first embodiment.
[FIG. 5] FIG. 5 is a flowchart illustrating isolation processing of an electrolysis stack according to the first embodiment.
[FIG. 6] FIG. 6 is a time chart illustrating a system operation and a grid voltage at the time of an operation for increasing a system load rate after performing isolation according to the first embodiment.
[FIG. 7] FIG. 7 is a time chart illustrating operation processing of increasing a system load rate after performing the isolation according to the first embodiment.
[FIG. 8] FIG. 8 is a diagram illustrating a device configuration of a water electrolysis system according to a second embodiment.
[FIG. 9] FIG. 9 is a time chart illustrating a system operation and a grid voltage at the time of isolation according to the second embodiment.
[FIG. 10] FIG. 10 is a diagram illustrating another device configuration of the water electrolysis system according to the second embodiment.
[FIG. 11] FIG. 11 is a flowchart illustrating isolation processing of the electrolysis stack according to the second embodiment.
[FIG. 12] FIG. 12 is a time chart illustrating a system operation and a grid voltage at the time of an operation for increasing a system load rate after performing isolation according to the second embodiment.
[FIG. 13A] FIG. 13A is a flowchart illustrating operation processing of increasing the system load rate after performing the isolation according to the second embodiment.
[FIG. 13B] FIG. 13B is a flowchart illustrating operation processing of increasing the system load rate after performing the isolation according to the second embodiment.
[FIG. 14] FIG. 14 is a diagram illustrating a device configuration (part 1) of the electrolysis stack group constituting the water electrolysis system according to the first and second embodiments.
[FIG. 15] FIG. 15 is a diagram illustrating a device configuration (part 2) of the electrolysis stack group constituting the water electrolysis system according to the first and second embodiments.
[FIG. 16] FIG. 16 is a diagram illustrating a device configuration (part 3) of the electrolysis stack group constituting the water electrolysis system according to the first and second embodiments.
[FIG. 17] FIG. 17 is a diagram illustrating a schematic configuration of a water grid, a hydrogen grid, and an oxygen grid of the water electrolysis system according to the embodiment.

### Description of Embodiments

Hereinafter, embodiments of the present invention will be described in detail with reference to the drawings and the like. The following description shows specific examples of the contents of the present invention, and the present invention is not limited to these descriptions, and various changes and modifications can be made by those skilled in the art within the scope of the technical idea disclosed in the present specification. In addition, in all the drawings for describing the present invention, parts having the same function are denoted by the same reference numerals, and repeated description thereof may be omitted.

### <<First Embodiment>>

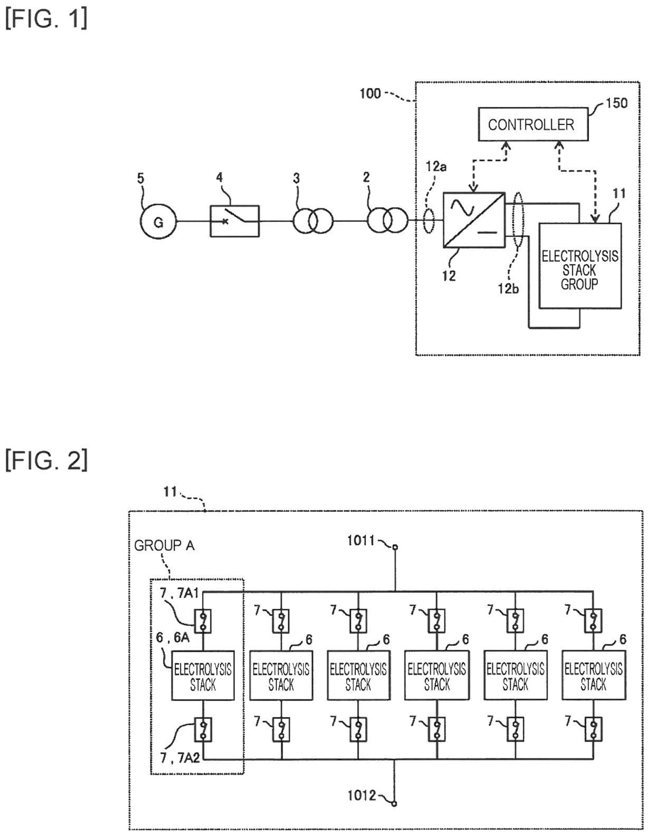

Hereinafter, a first embodiment for carrying out the present invention will be described with reference to FIGS. 1 to 7.

FIG. 1 is a diagram illustrating a device configuration of a water electrolysis system 100 according to the first embodiment. In the water electrolysis system 100, an electrolysis stack group 11 is connected to a DC-side connection end 12b of a power converter 12, and the operation states of the electrolysis stack group 11 and the power converter 12 are adjusted by a controller 150 (control device).

Note that the controller 150 includes, for example, a central processing unit (CPU), a random access memory (RAM), a read only memory (ROM), and the like. The controller 150 is embodied by developing a predetermined program (control program) stored in the ROM in the RAM and executing the program by the CPU. The program here is for causing a computer to execute a method for controlling.

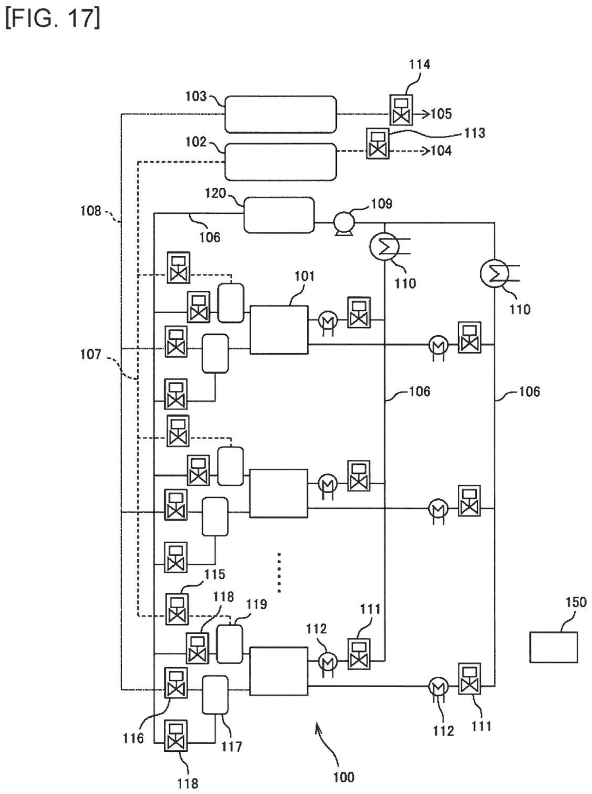

FIG. 17 is a diagram illustrating a schematic configuration of a water grid, a hydrogen grid, and an oxygen grid of the water electrolysis system 100 according to the embodiment. The water electrolysis system 100 mainly includes an electrolysis stack 101, a hydrogen gas tank 102, an oxygen gas tank 103, a water pipe 106, a hydrogen gas pipe 107, an oxygen gas pipe 108, a water supply pump 109, a large-scale cooler 110, a water flow rate adjustment valve 111, a small-scale cooler 112, a hydrogen gas tank pressure adjustment valve 113, an oxygen gas tank pressure adjustment valve 114, an electrolysis stack hydrogen gas pressure adjustment valve 115, an electrolysis stack oxygen gas pressure adjustment valve 116, an oxygen gas/water separation tank 117, an electrolysis stack water pressure adjustment valve 118, a hydrogen gas/water separation tank 119, and a water tank 120. FIG. 17 is an example of the water electrolysis system other than a proton permeation type, and as shown in a water electrolysis system 100, there are two water supply grids, and water is also supplied to a hydrogen electrode side.

A hydrogen production process of the water electrolysis system 100 will be described below.

Water is supplied from the water tank 120 to the oxygen electrode side and the hydrogen electrode side of individual electrolysis stacks 101 by the water supply pump 109. Hydrogen and oxygen are generated by applying a predetermined voltage to the electrolysis stack 101 to electrolyze the water. The generated hydrogen is separated in the hydrogen gas/water separation tank 119, is adjusted to a predetermined pressure by an electrolysis stack hydrogen gas pressure adjustment valve 115, passes through the hydrogen gas pipe 107, is collected in the hydrogen gas tank 102, and is adjusted to a predetermined pressure by the hydrogen gas tank pressure adjustment valve 113, and a hydrogen gas 104 is supplied to the outside. The water separated in the hydrogen gas/water separation tank 119 is adjusted to a predetermined pressure by the electrolysis stack water pressure adjustment valve 118, collected in the water tank 120, and supplied again to the electrolysis stack 101 through a water supply pump. Note that the water pipe 106 connected to the discharge side of the water supply pump 109 is configured to be branched into two grids to separately supply water to electrolysis stack 101.

The generated oxygen is discharged from the electrolysis stack 101 together with non-electrolyzed water, separated in the oxygen gas/water separation tank 117, adjusted to a predetermined pressure by the electrolysis stack oxygen gas pressure adjustment valve 116, collected in the oxygen gas tank 103 through the oxygen gas pipe 108, and adjusted to a predetermined pressure by the oxygen gas tank pressure adjustment valve 114, and an oxygen gas 105 is supplied to the outside. The water separated in the oxygen gas/water separation tank 117 is adjusted to a predetermined pressure by the electrolysis stack water pressure adjustment valve 118, collected in the water tank 120, and supplied again to the electrolysis stack 101 through a water supply pump. Note that although a power supply line is not illustrated in FIG. 17, the electrolysis stack 101 is connected to a general DC power supply, and power necessary for water electrolysis is supplied. The number of electrolysis stacks 101 included in the water electrolysis system 100 is changed depending on the capacity of the water electrolysis system 100, and as the capacity increases, the number of electrolysis stacks 101 included in the water electrolysis system 100 also increases.

. The water electrolysis system 100 is provided with the electrolysis stack hydrogen gas pressure adjustment valve 115 and the electrolysis stack oxygen gas pressure adjustment valve 116, but the present invention is not limited thereto, and there is also a water electrolysis system not provided with the valves. Since the typical electrolysis stack 101 has variations in characteristics and variations in electrolysis voltage due to deterioration, even if the same current flows, a difference in electrolysis efficiency occurs due to a difference in resistance value.

In the water electrolysis system 100 illustrated in FIG. 17, the electrolysis voltage of the individual electrolysis stack is measured, and the electrolysis stack having a high electrolysis voltage adjusts the electrolysis stack hydrogen gas pressure adjustment valve 115 and the electrolysis stack oxygen gas pressure adjustment valve 116 to lower the pressure. As a result, the voltage of the electrolysis stack having a high voltage is lowered by decreasing a reaction resistance, and a voltage difference from another electrolysis stack is reduced, so that the operation can be performed with improved electrolysis efficiency.

The electrolysis stack hydrogen gas pressure adjustment valve 115 and the electrolysis stack oxygen gas pressure adjustment valve 116 have a control algorithm in which the opening and closing degrees thereof are always monitored such that backflow does not occur due to the pressure difference from another electrolysis stack, and the hydrogen gas tank pressure adjustment valve 113 and the oxygen gas tank pressure adjustment valve 114 are controlled according to the situation to control the pressures of both gas tanks.

Returning to FIG. 1, the controller 150 also has a function of taking in information regarding the water electrolysis system 100 and external information such as a grid voltage and an amplitude of the grid voltage, and determines the operation state of the water electrolysis system 100 on the basis of various types of information. In the water electrolysis system 100, transformers 2 and 3 are connected to an AC-side connection end 12a of the power converter 12, and are connected to a power grid 5 via a switch 4 that adjusts connection and isolation with the power grid 5. The power grid 5 may be a three-phase AC grid or a single-phase AC grid. The configurations of the transformers 2 and 3, the switch 4, and the water electrolysis system 100 are changed depending on the power grid 5. Note that the power converter 12 has a function of converting AC power supplied from the power grid 5 into DC power and supplying the DC power to the DC-side connection end 102b.

FIG. 2 is a diagram illustrating a device configuration of the electrolysis stack group 11 according to the first embodiment. FIG. 2 illustrates a configuration example of the electrolysis stack group 11 constituting the water electrolysis system 100. A configuration (string) in which one circuit breaker 7 is connected to each of the front and rear of the electrolysis stack 6 is a configuration in which six circuit breakers 7 are connected in parallel to DC terminals 1011 and 1012 which are terminals connected to the DC-side connection end 12b of the power converter 12 (six strings are connected in parallel). In the first embodiment, the number of parallel connections of the electrolysis stack groups 11 is six, but the present invention is not limited thereto, and the number of the parallel connections may be other than six. Hereinafter, in the first embodiment, a method will be described in which an electrolysis stack 6A included in the string indicated by Group A in the string having six parallel connections is isolated from the electrolysis stack group 11. Note that examples of a scene where the isolation is required include, but are not limited to, abnormality detection of the electrolysis stack 6, operation testing, and maintenance.

In FIG. 2, a "series circuit" includes one electrolysis stack 6 and circuit breakers 7 and 7 provided on the positive side and the negative side of the electrolysis stack, respectively. In this respect, the string is the "series circuit".

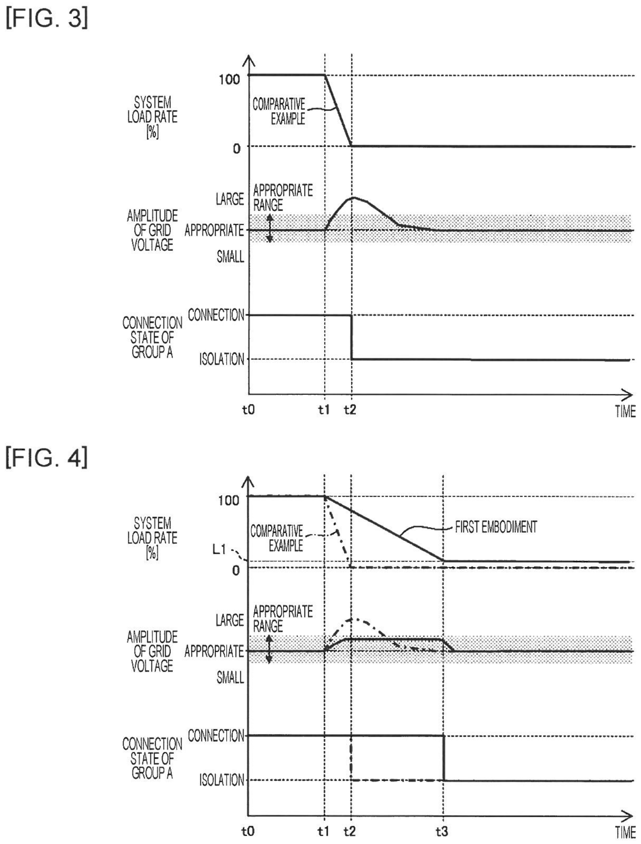

Hereinafter, a method for controlling (control processing) for isolating the electrolysis stack 6A from the electrolysis stack group 11 will be described with reference to FIGS. 3 to 7.

FIG. 3 is a time chart illustrating a system operation and a grid voltage at the time of isolation in a comparative example. That is, FIG. 3 illustrates a time chart of the system operation and the grid voltage at the time of isolation in the comparative example in a case where the first embodiment is not applied, which is used as a comparative description of the first embodiment. In FIG. 3, a horizontal axis represents time, and a vertical axis represents a system load rate, the amplitude of a grid voltage, and the connection state of Group A from the top. The upper part of the drawing indicates that the system load rate is 100%, the amplitude of the grid voltage is larger than an appropriate value, and the connection state of Group A is connected. Here, the system load rate refers to the rate of power supplied to the water electrolysis system, and 100% corresponds to a rated value. In addition, the amplitude of the grid voltage has an appropriate range, and an operator who sends an instruction regarding the operation state of equipment connected to the power grid and manages the equipment adjusts the amplitude such that the amplitude is suppressed within the appropriate range by the grid operator.

In the comparative example, it is assumed that the power converter 12 provided in the water electrolysis system 100 reduces the DC power supplied to the electrolysis stack group 11 from time t1 to time t2 to reduce the system load rate, and the electrolysis stack 6A (see FIG. 2) is isolated as soon as possible.

In this case, by rapidly reducing the system load rate, it is possible to adjust the system load rate to a state of 0%, which is a state of isolating the electrolysis stack 6A, and to set the connection state of Group A to the isolation at time t2. However, the AC power supplied from the power grid 5 to the AC-side connection end 12a of the power converter 12 of the water electrolysis system 100 is rapidly reduced, and the power of the power grid 5 instantaneously becomes surplus. As a result, as illustrated in the middle stage of FIG. 3, the amplitude of the grid voltage may increase and deviate from the appropriate range. Due to such a change in the amplitude of the grid voltage, there is a possibility that the equipment connected to the power grid 5 deviates from the state of the grid voltage for its operation, thereby causing a malfunction. In the worst case, the supply and demand balance of the power grid 5 may collapse, leading to occurrence of a wide area power failure in the power grid 5.

FIG. 4 is a time chart illustrating a system operation and a grid voltage at the time of isolation according to the first embodiment. Since the horizontal axis and the vertical axis of the drawing are similar to those of FIG. 3, description thereof is omitted. In FIG. 4, the state of the comparative example illustrated in FIG. 3 is indicated by a one-dot chain line, and the state of the first embodiment is indicated by a solid line. In the first embodiment, the power converter 12 provided in the water electrolysis system 100 reduces the DC power supplied to the electrolysis stack group 11, thereby decreasing the system load rate at time t1. During the decrease of the system load rate, the amplitude of the grid voltage is monitored, the decreasing speed of the system load rate is determined such that the amplitude of the grid voltage does not exceed the appropriate range, and the system load rate is reduced to L1. L1 is a system load rate at which circuit breakers 7A1 and 7A2 (see FIG. 2) can shift to the isolation state. In order to perform the isolation as soon as possible, Group A is isolated at a stage of L1 before the system load rate becomes 0%, but after the system load rate becomes L1, the state is shifted to a state in which the power of the circuit breakers 7A1 and 7A2 is cut off, so that the connection state of Group A becomes the isolation state. In the first embodiment, it is possible to quickly isolate the electrolysis stack 6A while maintaining the change width of the amplitude of the grid voltage below an appropriate range.

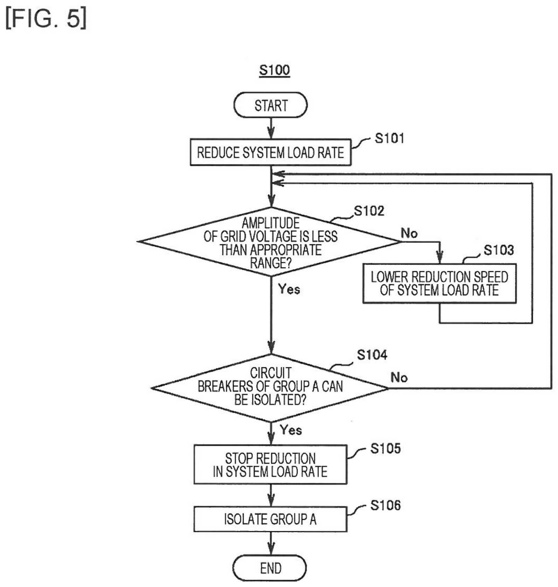

FIG. 5 is a flowchart illustrating isolation processing S100 of the electrolysis stack 6A according to the first embodiment. Note that the processing of the flowchart illustrated in FIG. 5 is implemented in the controller 150 (see FIG. 1). In the description of the processing, FIG. 2 is appropriately referred to.

After the isolation of the electrolysis stack 6A is determined, in step S101, the system load rate is reduced by reducing the DC power supplied from the DC-side connection end 102b of the power converter 12, and the process proceeds to step S102. In subsequent step S102, it is monitored whether or not the amplitude of the grid voltage is less than the appropriate range, in a case where the amplitude exceeds the appropriate range (step S102, No), the process proceeds to step S103, and in a case where the amplitude is less than the appropriate range (step S102, Yes), the process proceeds to step S104. In step S103, in order to make the amplitude of the grid voltage less than the appropriate range, the power of the DC-side connection end 102b of the power converter 12 is adjusted so as to lower the reduction speed of the system load rate, so that the decrease in the system load rate is slowed down, and the process returns to step S102. The appropriate range is, for example, a range in which a difference of the amplitude of the voltage of the AC power grid from a reference value is less than a predetermined value. As the predetermined value, any value that can achieve the purpose may be set, and for example, a value provided by the operator of the power grid or a value smaller than the value provided by the operator of the power grid in consideration of a safety margin may be set.

In step S104, it is determined whether or not the system load rate allows the isolation of the circuit breakers 7A and 7B of Group A, if the isolation is possible (step S104, Yes), the process proceeds to step S105, and if the isolation is not possible (step S104, No), the process returns to step S102. In subsequent step S105, the DC power at the DC-side connection end 102b of the power converter 12 is adjusted so as to stop the reduction in the system load rate, and the process proceeds to step S106. In step S106, the circuit breakers 7A and 7B of Group A are set in the isolation state, and a series of processing ends.

Hereinafter, a method of increasing the system load rate again after performing the isolation according to the first embodiment will be described.

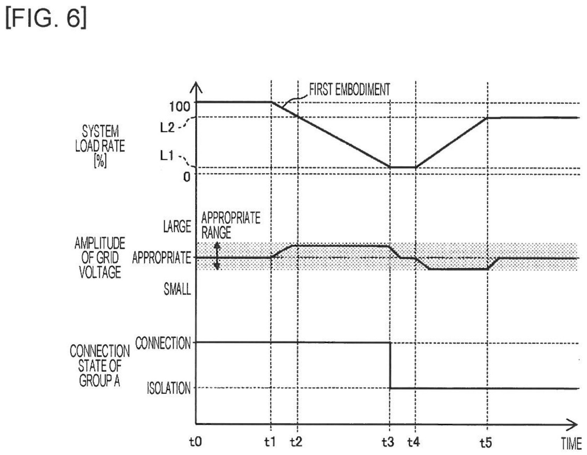

FIG. 6 is a time chart illustrating the system operation and the grid voltage at the time of an operation for increasing the system load rate after performing the isolation according to the first embodiment. Since the horizontal axis and the vertical axis in the drawing are similar to those in FIGS. 3 and 4, description thereof is omitted. In addition, the state before the isolation of Group A until time t3 is similar to that in FIG. 4, and thus description thereof will be omitted. When the present embodiment is applied, after the connection state of Group A is shifted to the isolation state at time t3, that is, the circuit breakers 7A1 and 7A2 are shifted to the isolation state (after the circuit breaker 7 electrically isolates the electrolysis stack 6A from a DC circuit), the power converter 12 is adjusted so as to maintain the system load rate at L1 until time t4. After time t4, the DC power at the DC-side connection end 12b of the power converter 12 is adjusted so as to increase the system load rate toward L2 until time t5 (increase the power supply of the power converter 12 to the DC-side connection end 12b). At this time, the increasing speed of the system load rate is determined such that the amplitude of the grid voltage does not deviate from the appropriate range.

Note that the system load rate L2 is a system load rate allowable by the electrolysis stack group 11 after the electrolysis stack 6A is isolated from the electrolysis stack group 11, and indicates a system load rate which is 5/6 of 100% in the first embodiment. The value of L2 is not limited thereto since the value is determined by factors such as the configuration of the electrolysis stack group 11, the states of a plurality of electrolysis stacks 6, the overall state of the water electrolysis system 100, and maintenance.

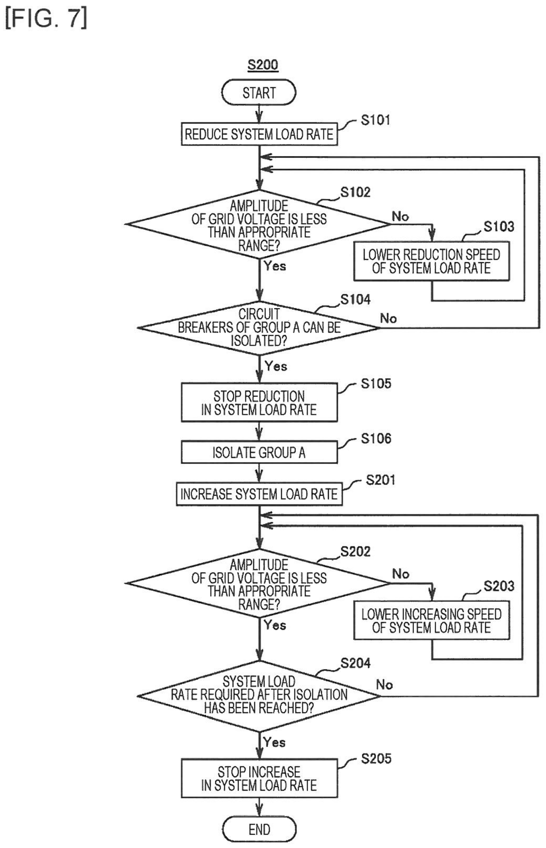

FIG. 7 is a time chart illustrating operation processing S200 of increasing the system load rate after performing the isolation according to the first embodiment. In the flowchart illustrated in FIG. 7, the processing from step S101 to step S106 is similar to that illustrated in FIG. 5, and thus detailed description thereof is omitted.

After step S106 is performed, the power converter 12 is adjusted to increase the system load rate in step S201. In subsequent step S202, it is determined whether or not the amplitude of the grid voltage is less than the appropriate range, in a case where the amplitude exceeds the appropriate range (step S202, No), the process proceeds to step S203, and in a case where the amplitude is less than the appropriate range (step S202, Yes), the process proceeds to step S204. In step S203, in order to make the amplitude of the grid voltage less than the appropriate range, the power converter 12 is adjusted so as to lower the increasing speed of the system load rate, so that the degree of increase of the system load rate is slowed down, and the process returns to step S202. In step S204, it is determined whether or not the system load rate (L2 in the first embodiment) required after the isolation of Group A has been reached. If the system load rate has not been reached (step S204, No), the increase in the system load rate is maintained, and the process returns to step S202. If the system load rate has been reached (step S204, Yes), the process proceeds to step S205. In step S205, the increase in the system load rate is stopped, and a series of operations ends.

When the first embodiment as described above is applied to the water electrolysis system 100, the electrolysis stacks 6 of the electrolysis stack group 11 can be quickly isolated without hindering the stabilization of the system, as the amplitude of the grid voltage is set to be less than the appropriate range.

### <<Second Embodiment>>

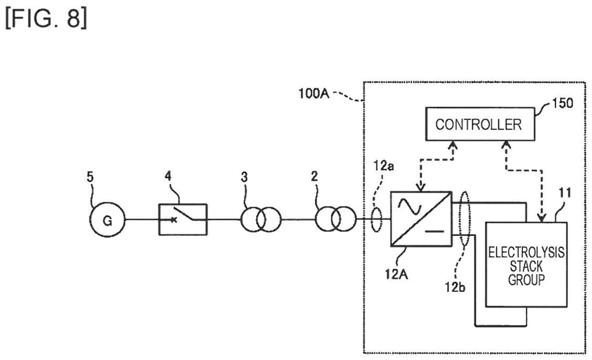

Hereinafter, a second embodiment for carrying out the present invention will be described with reference to FIGS. 8 to 13.

FIG. 8 is a diagram illustrating a device configuration of a water electrolysis system 100A according to the second embodiment. Since only a power converter 12A is different from that in FIG. 1, the description of functions other than the power converter 12A will be omitted.

The power converter 12A is a self-excited power converter, and has a function of converting AC power supplied from the power grid 5 to the AC-side connection end 12a into DC power and supplying the DC power to the DC-side connection end 12b, and a function capable of transmitting and receiving reactive power to and from the power grid 5. In addition, in the following, a method of isolating the electrolysis stack 6A (see FIG. 2) of Group A in the electrolysis stack group 11 will be described.

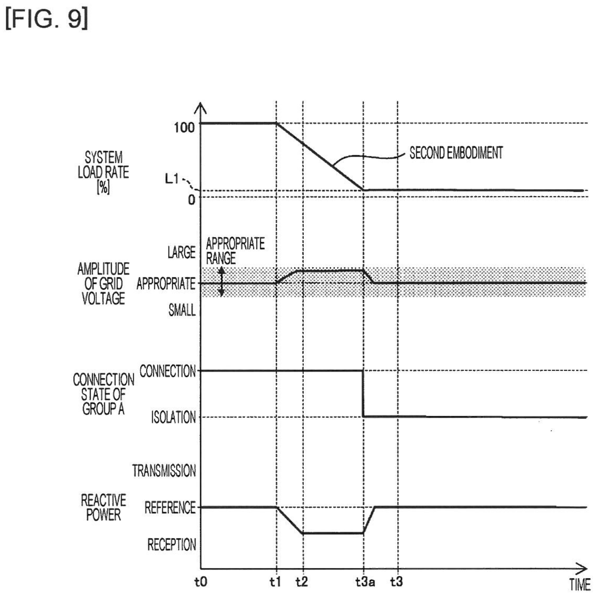

FIG. 9 is a time chart illustrating a system operation and a grid voltage at the time of isolation according to the second embodiment. In FIG. 9, a horizontal axis represents time, and a vertical axis represents the system load rate, the amplitude of the grid voltage, the connection state of Group A, and the reactive power transmitted and received between the power grid 5 and the power converter 12A provided in the water electrolysis system 100 from the top. The upper part of the drawing illustrates that the system load rate is 100%, the amplitude of the grid voltage is larger than the appropriate value, and the connection state of Group A is connected, and the reactive power is transmitted. Since the definitions of the appropriate ranges of the system load rate and the amplitude of the grid voltage are similar to those in the first embodiment, the description thereof will be omitted.

In the second embodiment, the response of the water electrolysis system 100 regarding the system load rate and the connection state of Group A from time t0 to time t1 and the reduction of the system load rate by the power converter 12A decreasing the DC power of the DC-side connection end 12b from time t1 are similar to those in the first embodiment, but as illustrated in the lowermost stage of FIG. 9, the power converter 12A receives the reactive power from the power grid 5.

When the system load rate is decreased, the decreasing speed of the system load rate is determined on the basis of the amplitude of the grid voltage, and the power converter 12A receives the reactive power from the power grid 5, so that the fluctuation range of the grid voltage due to the decrease in the system load rate from time t1 can be reduced as compared with the first embodiment. As a result, in the first embodiment, the decrease of the system load rate is performed in a period from time t1 to time t3, but in the second embodiment, the decrease of the system load rate is shortened from time t1 to time t3a, and the connection state of Group A can be set to the isolation at time t3a. Note that time t3a indicates time earlier than time t3. As a result, in the second embodiment, even when the electrolysis stack 6A is isolated, the increase in the amplitude of the grid voltage can be suppressed, the amplitude of the grid voltage can be suppressed to be less than the appropriate range, and the isolation can be performed more quickly than in the first embodiment.

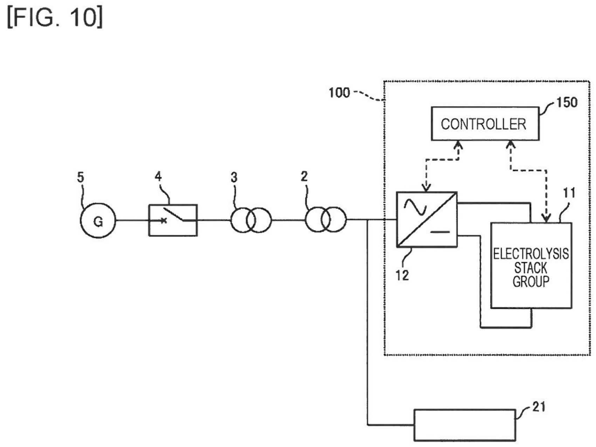

FIG. 10 is a diagram illustrating another device configuration of the water electrolysis system 100 according to the second embodiment. In FIG. 8, the power converter 12A receives the reactive power, but the invention is not limited thereto. As illustrated in FIG. 10, similarly to the first embodiment, the power converter 12 of the water electrolysis system 100 does not have a function of transmitting and receiving the reactive power. However, in a case where a peripheral device 21 connected to the power grid 5 in parallel with the water electrolysis system 100 can transmit and receive the reactive power to and from the power grid 5, the peripheral device 21 may adjust the reactive power illustrated in FIG. 9.

Here, the peripheral device 21 may be a static var compensator (SVC) or a static synchronous compensator (STATCOM) which is a reactive power compensation device, or may be a device including a power conditioning system (PCS) which is a self-excited power converter.

In addition, in FIG. 10, the peripheral device 21 is connected to the power grid 5 via the transformers 2 and 3, but the present invention is not limited thereto, and a connection position may be connected to the power grid 5 side. At this time, the controller 150 and the peripheral device 21 adjust the reactive power while transmitting and receiving states to and from each other by using communication means.

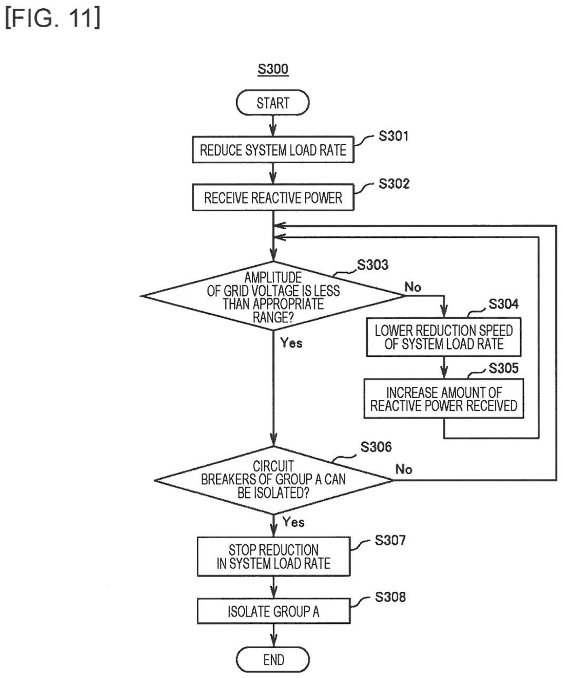

FIG. 11 is a flowchart illustrating isolation processing S300 of the electrolysis stack according to the second embodiment. FIG. 2 is appropriately referred to.

After the start of the isolation of the electrolysis stack 6A is determined, in step S301, processing of decreasing the DC power at the DC-side connection end 12b of the power converter 12A to reduce the system load rate is executed, and the process proceeds to step S302. In step S302, processing of receiving the reactive power by the power converter 12A is executed, and the process proceeds to step S303. In step S303, it is determined whether or not the amplitude of the grid voltage is less than the appropriate range, in a case where the amplitude exceeds the appropriate range (step S303, No), the process proceeds to step S304, and in a case where the amplitude is less than the appropriate range (step S303, Yes), the process proceeds to step S306. In step S304, processing of lowering the reduction speed of the system load rate is performed, and then the process proceeds to step S305. In step S305, processing of increasing the amount of reactive power received is executed, and the process returns to S303, which is processing of monitoring a change in the grid voltage.

In step S306, it is determined whether or not the circuit breakers 7A1 and 7A2 of Group A can be isolated. If the isolation is possible (step S306, Yes), the process proceeds to step S307. If the isolation is not possible (step S306, No), the process waits until the system load rate is reduced and the isolation becomes possible, and then, the process returns to step S303. In step S307, processing of stopping the system load rate is executed, and the process proceeds to step S308. In step S308, the circuit breakers 7A1 and 7A2 are shifted to the isolation state in order to isolate the electrolysis stack 6A of Group A, and then a series of processing ends.

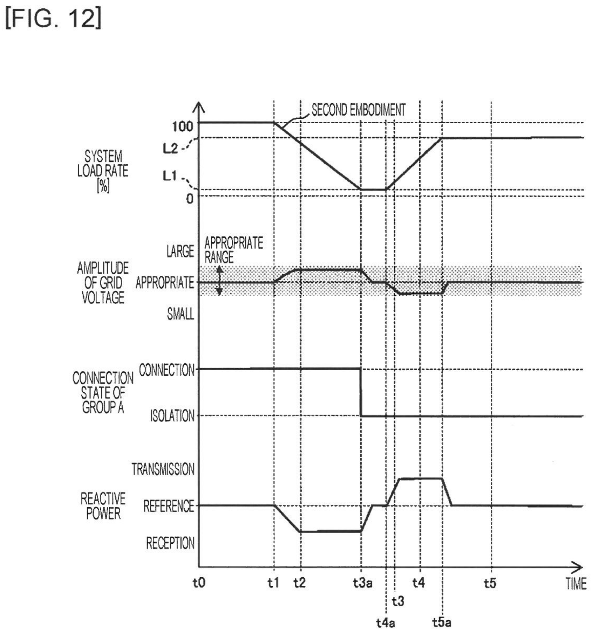

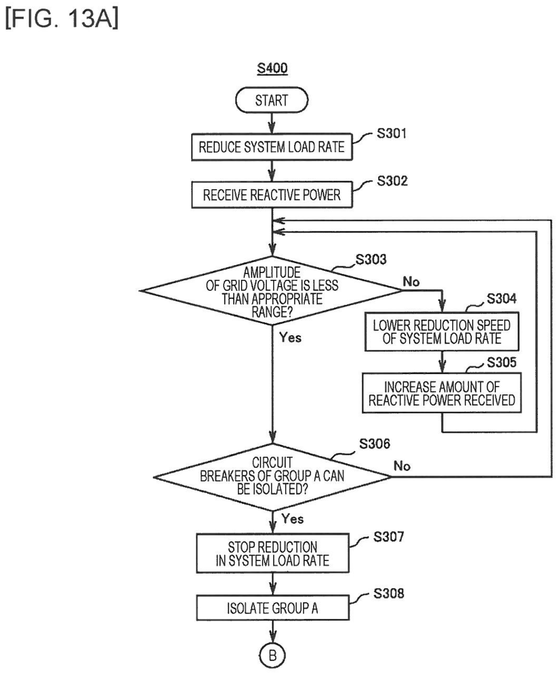

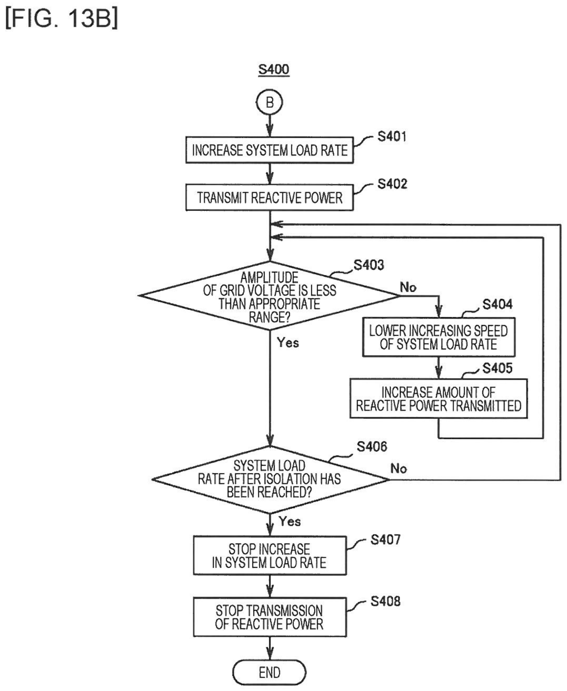

Hereinafter, an operation method (operation processing) of increasing the system load rate of the water electrolysis system 100 after Group A is isolated from the electrolysis stack group 11 will be described with reference to FIGS. 12 and 13.

FIG. 12 is a time chart illustrating the system operation and the grid voltage at the time of the operation for increasing the system load rate after performing isolation according to the second embodiment. Since the horizontal axis and the vertical axis in FIG. 12 are similar to those in FIG. 9, detailed description thereof is omitted. In addition, since the system state and the grid state from time t0 to time t3a are similar to those in FIG. 9, detailed description thereof is omitted.

After the connection state of Group A is isolated at time t3a, the system load rate is maintained at L1 until time t4a. The system load rate is increased by increasing the DC power at the DC-side connection end 12b of the power converter 12A at time t4a, and the system load rate is increased to the system load rate L2 at which the water electrolysis system 100 can operate after Group A is isolated. At this time, the increasing speed of the system load rate from time t4a to time t5a is determined on the basis of the amplitude of the grid voltage, but is set to a value that keeps the amplitude of the grid voltage less than the appropriate range. In parallel, from time t4a to time t5a, the reactive power is transmitted from the AC-side connection end 12a of the power converter 12A to the power grid 5, so that the amplitude of the grid voltage is suppressed to be less than the appropriate range.

Note that similarly to the description with reference to FIG. 9, the power converter 12A transmits the reactive power. However, the present invention is not limited thereto, and as illustrated in FIG. 10, in a case where the peripheral device 21 (SVC or STATCOM) connected to the power grid 5 in parallel with the water electrolysis system 100 can transmit and receive reactive power to and from the power grid 5, the peripheral device 21 may adjust the reactive power illustrated in FIG. 12.

In the second embodiment, in a case where the system load rate described above is reduced and Group A is isolated from the electrolysis stack group 11, the reduction period of the system load rate can be set to t3a-t1 which is a period shorter than t3-t1 which is the period. However, even when the system load rate is increased, the reduction period of the system load rate can be set to t5a-t4a which is a period shorter than t5-t4 which is the period of the first embodiment, and in the second embodiment, the system load rate can be restored more quickly than in the first embodiment.

FIGS. 13A and 13B are flowcharts illustrating operation processing S400 of increasing the system load rate after performing the isolation according to the second embodiment. Since the processing from step S301 to step S308 is similar to that in FIG. 11, detailed description thereof is omitted.

After step S308, which is processing of isolating Group A from the electrolysis stack group 11, is performed, in step S401, processing of adjusting the DC power of the DC-side connection end 12b of the power converter 12A to increase the system load rate is executed, and then the process proceeds to step S402. In step S402, processing of transmitting the reactive power from the AC-side connection end 12a of the power converter 12A is executed, and then the process proceeds to step S403. In step S403, it is determined whether or not the amplitude of the grid voltage is less than the appropriate range, in a case where the amplitude exceeds the appropriate range (step S403, No), the process proceeds to step S404, and in a case where the amplitude is less than the appropriate range (step S403, Yes), the process proceeds to step S406. In step S404, processing of lowering the increasing speed of the system load rate is executed, and then the process proceeds to step S405. After processing of increasing the amount of reactive power transmitted is executed in step S405, the process returns to step S403.

In step S406, it is determined whether or not the system load rate after the isolation reaches L2. If the system load rate has not reached L2 (step S406, No), the process waits and returns to step S403. If the system load rate has reached L2 (step S406, Yes), the process proceeds to step S407. In step S407, processing of stopping the increase in the system load rate is executed, and then the process proceeds to step S408. In step S408, the transmission of the reactive power is stopped, and a series of processing ends.

When the second embodiment according to the present invention as described above is applied to the water electrolysis system 100, it is possible to suppress fluctuation of the grid voltage of the power grid 5 to a minimum when the electrolysis stack 6 is isolated from the electrolysis stack group 11. In particular, by adding a function of adjusting the reactive power to the first embodiment, a time until the electrolysis stack 6 is isolated can be shortened.

In the first and second embodiments described above, the configuration in which the electrolysis stack group 11 is connected in parallel with the electrolysis stacks 6 as illustrated in FIG. 2 has been described, but the present invention is not limited thereto.

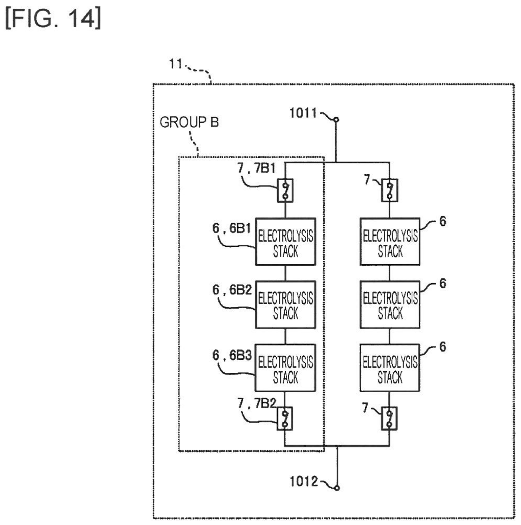

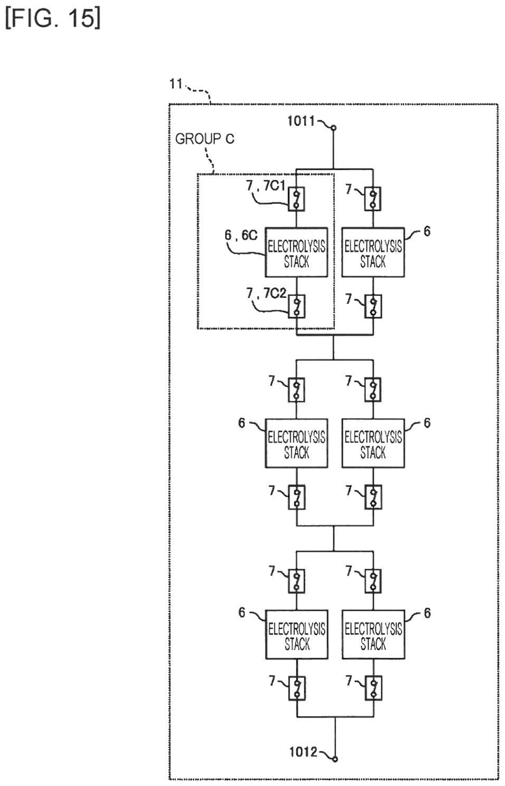

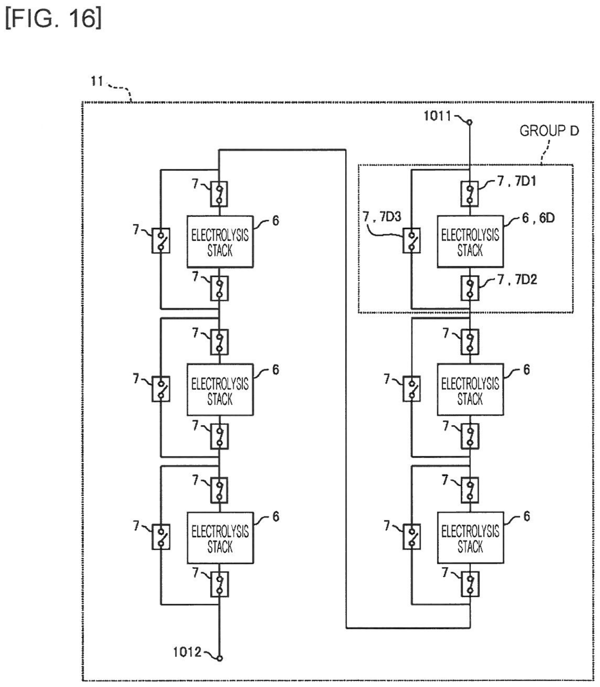

FIG. 14 is a diagram illustrating a device configuration (part 1) of the electrolysis stack group constituting the water electrolysis system according to the first and second embodiments. FIG. 15 is a diagram illustrating a device configuration (part 2) of the electrolysis stack group constituting the water electrolysis system according to the first and second embodiments. FIG. 16 is a diagram illustrating a device configuration (part 3) of the electrolysis stack group constituting the water electrolysis system according to the first and second embodiments.

For example, as illustrated in FIG. 14, strings may be connected in parallel, each string having a plurality of the electrolysis stacks 6 connected in series, and circuit breakers 7B1 and 7B2 may be operated in order to isolate electrolysis stacks 6B1, 6B2, and 6B3 of Group B. In the case of FIG. 14, when the system load rate after the isolation of Group B is increased, the number of electrolysis stacks isolated is three, and thus L2 is 3/6 (= 1/2) of 100%. Incidentally, in FIG. 2 described above, one electrolysis stack 6 is provided in one string (series circuit), but in the example of FIG. 14, three electrolysis stacks 6 are provided in series in one string (three electrolysis stacks 6 are connected in a daisy chain).

As another example, as illustrated in FIG. 15, a configuration may be such that a large number of units in which strings are connected in parallel may be connected in series, each string having one electrolysis stack 6 and two circuit breakers 7 connected, and circuit breakers 7C1 and 7C2 may be operated in order to isolate an electrolysis stack 6C of Group C. In the case of FIG. 15, when the system load rate after the isolation of Group C is increased, L2 is 1/2 of 100%. This is because the configuration of the electrolysis stack group 11 has three configurations, which have the electrolysis stacks 6 connected in parallel, in series. After the electrolysis stack 6C is isolated from Group C, the number of electrolysis stacks in parallel in the parallel circuit including Group C decreases from two to one. As a result, the current capacity of the electrolysis stack group 11 also becomes 1/2 of 100% since the current capacity of the parallel circuit including Group C is determined based on the electrolysis stacks 6 which are not isolated.

As still another example, as illustrated in FIG. 16, a configuration may be such that a large number of units are connected in series, each unit having one electrolysis stack 6 and two circuit breakers 7 connected and a circuit breaker 7D3 connected to the bypass, and the circuit breakers 7D1, 7D2, and 7D3 may be operated in order to isolate an electrolysis stack 6D of Group D. In the case of FIG. 16, when the electrolysis stack 6D is isolated, the circuit breaker 7D3 is set to an energized state. Further, when the system load rate after the isolation of Group D is increased, L2 is 5/6 of 100%.

Even if the configuration of the electrolysis stack group 11 is as illustrated in FIGS. 14 to 16, by applying the embodiment according to the present invention, it is possible to promptly isolate the electrolysis stack 6 while suppressing the influence on the power grid 5.

A water electrolysis system 100 according to the embodiment is a water electrolysis system including: a power converter 12 capable of converting AC and DC to transmit and receive power between an AC-side connection end 12a and a DC-side connection end 12b; an electrolysis stack 6 which electrolyzes water to generate hydrogen and oxygen; a circuit breaker 7 which is connected to a DC circuit on a DC-side connection end side and enables connection and disconnection of the DC circuit by an external signal or an external operation; and a control device (for example, controller 150) which controls the power converter and the circuit breaker 7, in which the AC-side connection end 12a of the power converter 12 is connected to an AC power grid, and a series circuit constituted by at least one electrolysis stack 6 and the circuit breaker 7 connected to the at least one electrolysis stack 6 is connected to the DC-side connection end 12b of the power converter 12.

The control device reduces the power flowing to the DC-side connection end 12b before isolation of the electrolysis stack 6 from the series circuit, while maintaining a speed at which the power converter 12 reduces the power flowing to the DC-side connection end to a speed that allows a difference of an amplitude of a voltage of the AC power grid from a reference value to be less than a predetermined value, and when reaching a power level enabling disconnection of an internal DC circuit by the circuit breaker 7, disconnects the circuit breaker 7 connected to the DC circuit and isolates the electrolysis stack 6 from the series circuit.

According to the present embodiment, in the water electrolysis system in which a large number of electrolysis stacks are connected, it is possible to suppress the influence on the grid voltage of the connected power grid even when some of the electrolysis stacks are isolated, and it is possible to reduce an additional cost or the like related to a countermeasure for suppressing the fluctuation of the power grid.

A method for controlling a water electrolysis system according to the present embodiment is a method for controlling a water electrolysis system including a power converter 12 capable of converting AC and DC to transmit receive power between an AC-side connection end 12a and a DC-side connection end 12b, an electrolysis stack 6 which electrolyzes water to generate hydrogen and oxygen, a circuit breaker 7 which is connected to a DC circuit on a DC-side connection end side 12b and enables connection and disconnection of the DC circuit by an external signal or an external operation, and a control device (for example, controller 150) for controlling the power converter 12 and the circuit breaker 7, in which the AC-side connection end 12a of the power converter 12 is connected to an AC power grid, and a series circuit constituted by at least one electrolysis stack 6 and the circuit breaker 7 connected to the at least one electrolysis stack 6 is connected to the DC-side connection end 12b of the power converter 12, the power flowing to the DC-side connection end 12b is reduced before the electrolysis stack 6 is isolated from the series circuit, while maintaining a speed at which the power converter 12 reduces the power flowing to the DC-side connection end 12b below a speed that allows a difference of an amplitude of a voltage of the AC power grid from a reference value to be less than a predetermined value, and when reaching a power level enabling disconnection of an internal DC circuit by the circuit breaker 7, the circuit breaker 7 connected to the DC circuit is disconnected, and the electrolysis stack 6 is isolated from the series circuit.

A water electrolysis system 100 illustrated in FIG. 17 described above includes a plurality of water electrolysis stacks (for example, electrolysis stack 101) connected in series with a DC power supply, a first tank (for example, hydrogen gas tank 102) that stores hydrogen generated in the water electrolysis stacks, a second tank (for example, oxygen gas tank 103) that stores oxygen generated in the water electrolysis stacks, a first hydrogen pressure adjustment valve (for example, hydrogen gas tank pressure adjustment valve 113) which adjusts a pressure of hydrogen generated in the entire plurality of water electrolysis stacks, a first oxygen pressure adjustment valve (for example, oxygen gas tank pressure adjustment valve 114) which adjusts a pressure of oxygen generated in the entire plurality of water electrolysis stacks, a second hydrogen pressure adjustment valve (for example, electrolysis stack hydrogen gas pressure adjustment valve 115) which adjusts a pressure of hydrogen generated in each water electrolysis stack, a second oxygen pressure adjustment valve (for example, electrolysis stack oxygen gas pressure adjustment valve 116) which adjusts a pressure of oxygen generated in each water electrolysis stack, and a control device (for example, controller 150) which controls opening and closing of the first hydrogen pressure adjustment valve, the first oxygen pressure adjustment valve, the second hydrogen pressure adjustment valve, and the second oxygen pressure adjustment valve.

Further, in the water electrolysis system 100, each of the electrolysis stacks 101 includes a voltage measurement device (not illustrated), the control device has information regarding a specification voltage region (specification voltage range) and a warning voltage region (warning voltage range), and has a function of calculating a pressure of the hydrogen gas 104 or a pressure of the oxygen gas 105 to be decreased to lower the voltage to the specification voltage region in a case where the voltage of the electrolysis stack 101 measured by the voltage measurement device reaches the warning voltage region.

Further, in the water electrolysis system 100, each electrolysis stack 101 includes a voltage measurement device (not illustrated), the control device has information regarding a specification voltage region and a warning voltage region, and has a function of adjusting opening and closing of the electrolysis stack hydrogen gas pressure adjustment valve 115 or the electrolysis stack oxygen gas pressure adjustment valve 116 corresponding to the electrolysis stack 101 to lower the pressure of the hydrogen gas 104 or the pressure of the oxygen gas 105 of the electrolysis stack 101 in a case where the voltage of the electrolysis stack 101 measured by the voltage measurement device reaches the warning voltage region.

Further, in the water electrolysis system 100, each of the electrolysis stacks 101 includes a pressure measurement device (not illustrated) which measures a gas pressure of the electrolysis stack 101, and the control device has information regarding a specification pressure region and a warning pressure region, and has a function of adjusting opening and closing of the electrolysis stack hydrogen gas pressure adjustment valve 115 or the electrolysis stack oxygen gas pressure adjustment valve 116 corresponding to the electrolysis stack 101 to lower the pressure of the oxygen gas 105 or the hydrogen gas 104 of the electrolysis stack 101 in a case where the gas pressure measured by the pressure measurement device reaches the warning pressure region.

Further, the water electrolysis system 100 further includes a temperature measurement device (not illustrated) which measures a temperature of each electrolysis stack 101 or a temperature of water discharged from each electrolysis stack 101, a water supply pump 109 (liquid feeding device) which supplies water to the entire plurality of electrolysis stacks 101, a large-scale cooler 110 (first cooler) which adjusts the temperature of the water supplied to the entire plurality of electrolysis stacks 101, a water flow rate adjustment valve 111 (valve) and a small-scale cooler 112 (second cooler) which are provided in a water pipe 106 (supply pipe) of water between the water supply pump 109 or the large-sized cooler 110 and the electrolysis stacks 101, and a control device which controls the water supply pump 109, the large-sized cooler 110, the small-scale cooler 112, and the water flow rate adjustment valve 111, and the control device has a function of opening the water flow rate adjustment valve 111 corresponding to the electrolysis stack 101 or cooling the water supplied to the electrolysis stack 101 by the small-scale cooler 112 corresponding to the electrolysis stack 101 in a case where the temperature of any one of the individual electrolysis stacks 101 changes.

### Reference Signs List

2, 3 transformer
4 switch
5 power grid (AC power grid)
6 electrolysis stack
7 circuit breaker
21 peripheral device (peripheral equipment capable of transmitting and receiving reactive power)
11 electrolysis stack group
12, 12A power converter
12a AC-side connection end
12b DC-side connection end
100, 100A water electrolysis system
101 electrolysis stack (water electrolysis stack)
102 hydrogen gas tank (first tank)
103 oxygen gas tank (second tank)
104 hydrogen gas
105 oxygen gas
106 water pipe
107 hydrogen gas pipe
108 oxygen gas pipe
109 water supply pump
110 large-scale cooler
111 water flow rate adjustment valve
112 small-scale cooler
113 hydrogen gas tank pressure adjustment valve (first hydrogen pressure adjustment valve)
114 oxygen gas tank pressure adjustment valve (first oxygen pressure adjustment valve)
115 electrolysis stack hydrogen gas pressure adjustment valve (second hydrogen pressure adjustment valve)
116 electrolysis stack oxygen gas pressure adjustment valve (second oxygen pressure adjustment valve)
117 oxygen gas/water separation tank
118 electrolysis stack water pressure adjustment valve
119 hydrogen gas/water separation tank
120 water tank
150 controller (control device)
1011, 1012 DC terminal
S100, S300 isolation processing
S200, S400 operation processing

## Claims

1. A water electrolysis system comprising:
a power converter capable of converting AC and DC to transmit and receive power between an AC-side connection end and a DC-side connection end; an electrolysis stack which electrolyzes water to generate hydrogen and oxygen; a circuit breaker which is connected to a DC circuit on a DC-side connection end side and enables connection and disconnection of the DC circuit by an external signal or an external operation; and a control device which controls the power converter and the circuit breaker, wherein
the AC-side connection end of the power converter is connected to an AC power grid,
a series circuit constituted by at least one electrolysis stack and the circuit breaker connected to the at least one electrolysis stack is connected to the DC-side connection end of the power converter, and
the control device
reduces the power flowing to the DC-side connection end before isolation of the electrolysis stack from the series circuit, while maintaining a speed at which the power converter reduces the power flowing to the DC-side connection end below a speed that allows a difference of an amplitude of a voltage of the AC power grid from a reference value to be less than a predetermined value, and
when reaching a power level enabling disconnection of an internal DC circuit by the circuit breaker, disconnects the circuit breaker connected to the DC circuit and isolates the electrolysis stack from the series circuit.

2. The water electrolysis system according to claim 1, wherein
reactive power is received from the AC power grid when the power at the DC-side connection end of the power converter before the electrolysis stack is isolated is reduced.

3. The water electrolysis system according to claim 2, wherein
the reactive power from the AC power grid is received by the power converter.

4. The water electrolysis system according to claim 2, wherein
the reactive power from the AC power grid is received by a device which is connected in parallel with the water electrolysis system and is capable of transmitting and receiving reactive power to and from the AC power grid.

5. The water electrolysis system according to claim 1, wherein
power supply of the power converter to the DC-side connection end is increased after electrical isolation of the electrolysis stack from the DC circuit at the circuit breaker.

6. The water electrolysis system according to claim 1, wherein
the control device
receives information regarding the voltage of the AC power grid while reducing the power flowing to the DC-side connection end, and reduces a speed at which the power converter decreases the power flowing to the DC-side connection end, in a case where a difference of the amplitude of the voltage of the AC power grid from the reference value exceeds a predetermined value.

7. The water electrolysis system according to any one of claims 1 to 6, wherein
two or more of the series circuits are connected in series to the DC-side connection end of the power converter.

8. The water electrolysis system according to any one of claims 1 to 6, wherein
two or more of the series circuits are connected in parallel to the DC-side connection end of the power converter.

9. The water electrolysis system according to any one of claims 1 to 6, wherein
two or more of the series circuits are connected in series and in parallel to the DC-side connection end of the power converter.

10. A method for controlling a water electrolysis system comprising:
a power converter capable of converting AC and DC to transmit and receive power between an AC-side connection end and a DC-side connection end; an electrolysis stack which electrolyzes water to generate hydrogen and oxygen; a circuit breaker which is connected to a DC circuit on a DC-side connection end side and enables connection and disconnection of the DC circuit by an external signal or an external operation; and a control device which controls the power converter and the circuit breaker, wherein
the AC-side connection end of the power converter is connected to an AC power grid,
a series circuit constituted by at least one electrolysis stack and the circuit breaker connected to the at least one electrolysis stack is connected to the DC-side connection end of the power converter,
the power flowing to the DC-side connection end is reduced before the electrolysis stack is isolated from the series circuit, while maintaining a speed at which the power converter reduces the power flowing to the DC-side connection end below a speed that allows a difference of an amplitude of a voltage of the AC power grid from a reference value to be less than a predetermined value, and
when reaching a power level enabling disconnection of an internal DC circuit by the circuit breaker, the circuit breaker connected to the DC circuit is disconnected and the electrolysis stack is isolated from the series circuit.

11. The method for controlling the water electrolysis system according to claim 10, wherein
reactive power is received from the AC power grid when the power at the DC-side connection end of the power converter before isolation of the electrolysis stack is reduced.

12. The method for controlling the water electrolysis system according to claim 11, wherein
the reactive power from the AC power grid is received by the power converter.

13. The method for controlling the water electrolysis system according to claim 11, wherein
the reactive power from the AC power grid is received by a device which is connected in parallel with the water electrolysis system and is capable of transmitting and receiving reactive power to and from the AC power grid.

14. The method for controlling the water electrolysis system according to claim 10, wherein
power supply of the power converter to the DC-side connection end is increased after electrical isolation of the electrolysis stack from the DC circuit at the circuit breaker.
